# EUROPÄISCHE PATENTSCHRIFT

(11) **EP 1 316 096 B1**
(45) Veröffentlichungstag und Bekanntmachung des Hinweises auf die Patenterteilung: **14.11.2007**
(21) Anmeldenummer: 01957739.4
(22) Anmeldetag: 30.07.2001
(51) Int. Cl.: H01G 9/042

(54) **ELEKTRODE UND KONDENSATOR MIT DER ELEKTRODE**
ELECTRODE AND CAPACITOR PROVIDED WITH SAID ELECTRODE
ELECTRODE ET CONDENSATEUR MUNI D'UNE ELECTRODE

(30) Priorität: 08.09.2000 DE 10044451
(43) Veröffentlichungstag der Anmeldung: 04.06.2003
(73) Patentinhaber: EPCOS AG, 81669 München (DE)
(72) Erfinder: STENZEL, Melanie, 89561 Demmingen (DE); ZILLGEN, Holger, 89564 Nattheim (DE); GIBER, Janos, H-111 Budapest (HU)
(74) Vertreter: Epping - Hermann - Fischer
(86) Internationale Anmeldenummer: PCT/DE2001/002876
(87) Internationale Veröffentlichungsnummer: WO 2002/021549

(56) Entgegenhaltungen:
- DE-A- 19 857 039
- DE-A- 19 953 946
- US-A- 5 859 760

## Beschreibung

Die Erfindung betrifft eine Elektrode für einen Kondensator mit einem Elektrodenableiter und mit einem Elektrodenkörper, der mit dem Elektrodenableiter kontaktiert ist und auf dessen Oberfläche eine Dielektrikumschicht angeordnet ist. Ferner betrifft die Erfindung einen Kondensator mit einer solchen Elektrode.

Es sind Elektroden für Kondensatoren bekannt, bei denen der Elektrodenkörper ein poröser Sinterkörper aus Niob ist und bei denen die Dielektrikumschicht eine durch anodisches Oxidieren des porösen Sinterkörpers hergestellte Schicht aus Nb₂O₅ ist. Solche Elektroden können im Prinzip als Anoden für Elektrolytkondensatoren verwendet werden, wobei die Poren des Sinterkörpers mit einem Kathodenmaterial gefüllt sind, welches mit einem Kathodenableiter kontaktiert ist.

Die bekannten Elektroden haben den Nachteil, daß die Dielektrikumschicht nicht genügend langzeitstabil ist, da der Sauerstoff aus der Dielektrikumschicht in den Elektrodenkörper diffundieren kann. Durch die Sauerstoffabgabe werden im Dielektrikum Suboxide, wie beispielsweise das halbleitende NbO₂ beziehungsweise das metallisch leitende NbO gebildet. Dadurch wird das Dielektrikum effektiv dünner, wodurch die Spannungsfestigkeit verloren geht und der Kondensator nach einer gewissen Zeit ausfällt.

Aus US 5,859,760 ist ein mikroelektronischer Kondensator bekannt, bei dem eine Sauerstoffbarriereschicht zwischen einer Elektrode und einer dielektrischen Schicht angeordnet ist.

Ziel der vorliegenden Erfindung ist es daher, eine Elektrode für Kondensatoren bereitzustellen, die eine hohe Langzeitstabilität aufweist.

Dieses Ziel wird erfindungsgemäß durch eine Elektrode nach Patentanspruch 1 erreicht. Ein Kondensator mit der Elektrode sowie weitere Ausgestaltungen der Erfindung sind den weiteren Ansprüchen zu entnehmen.

Die Erfindung gibt eine Elektrode für einen Kondensator an, mit einem Elektrodenableiter und mit einem Elektrodenkörper, der mit dem Elektrodenableiter kontaktiert ist, und auf dessen Oberfläche eine Dielektrikumschicht angeordnet ist. Zwischen dem Elektrodenkörper und der Dielektrikumschicht ist eine Zwischenschicht angeordnet, die den Austausch von Materie zwischen der Dielektrikumschicht und dem Elektrodenkörper hemmt.

Die erfindungsgemäße Elektrode ist aus einem Material hergestellt, das eine Komponente A und eine Komponente B umfaßt, wobei die Oberflächenenergie der Komponente B kleiner ist als die Oberflächenenergie der Komponente A und wobei die Zwischenschicht einen aus dem Ausgangsmaterial segregierten Teil der Komponente B umfaßt. Die Komponente B kann dabei in Form einer Dotierung des Materials vorliegen.

Durch die Herstellung der Zwischenschicht mittels Segregation einer Komponente B kann diese besonders leicht und ohne großen Aufwand erfolgen, da sich die Zwischenschicht dadurch automatisch an der für die Erfindung geeigneten Stelle, nämlich an der Oberfläche des Elektrodenkörpers, herstellen läßt. Dabei kommt als Material insbesondere eine metallische Legierung in Betracht, bei dem der Anteil der Komponente B typischerweise zwischen 10 Gewichts-ppm und 50 Gewichts-% beträgt.

Eine metallische Legierung hat den Vorteil, daß der damit hergestellte Elektrodenkörper gleichzeitig die für einen Kondensator erforderlichen elektrisch leitenden Eigenschaften aufweist. Dabei ist es besonders vorteilhaft, wenn die Komponente A der Legierung ein zur Ausbildung eines Dielektrikums geeignetes Ventilmetall ist oder wenn die Komponente A eine Legierung ist, die ein solches Ventilmetall enthält. Ventilmetalle haben die Eigenschaften, daß sie zur Bildung einer geeigneten Dielektrikumschicht durch Oxidation fähig sind. Als Ventilmetall kommt beispielsweise Tantal oder Niob in Betracht. Als ventilmetallhaltige Legierung kann beispielsweise eine Tantal/Niob-Legierung verwendet werden, die auch bei der Bildung der Dielektrikumschicht durch Oxidation ein entsprechendes Mischoxid mit vorteilhaften Eigenschaften ausbildet. Die Komponente B kann in diesen Fällen jeweils eines der oben genannten Einzelmetalle, beispielsweise Vanadium, oder eine Kombination daraus sein.

Es ist ferner vorteilhaft, wenn der Elektrodenkörper aus einer Niob und Vanadium enthaltenden Legierung hergestellt ist, da aufgrund der unterschiedlichen Oberflächenenergien von Niob (γ = 2,983 Jm⁻²) und Vanadium (γ = 2,876 Jm⁻²) leicht eine Zwischenschicht aus segregiertem Vanadium gebildet werden kann. Die Segregation des Vanadiums an die Oberfläche des Niob kann beispielsweise durch eine entsprechend geeignete Wärmebehandlung nach der Oxidation des Elektrodenkörpers erfolgen.

Darüber hinaus gibt die Erfindung einen Kondensator mit einer erfindungsgemäßen Elektrode an, der eine Gegenelektrode aufweist und bei dem die Dielektrikumschicht zwischen der Zwischenschicht und der Gegenelektrode angeordnet ist.

Ferner gibt die Erfindung einen Kondensator an, bei dem die Oberflächen der Poren der Elektrode mit einer Gegenelektrode bedeckt sind und bei die Gegenelektrode mit einem Gegenelektrodenableiter kontaktiert ist.

Die erfindungsgemäße Elektrode hat den Vorteil, daß aufgrund der Zwischenschicht Materialveränderungen der Dielektrikumschicht oder des Elektrodenkörpers wirksam gehemmt werden können. Dadurch verbessert sich die Stabilität des Elektrodenkörpers beziehungsweise der Dielektrikumschicht und die Elektrode beziehungsweise der mit ihr hergestellte Kondensator weist eine verbesserte Langzeitstabilität auf.

Die Erfindung kann besonders vorteilhaft verwendet werden für Elektroden, bei denen der Elektrodenkörper ein poröser Körper ist. Poröse Körper zeichnen sich durch eine große Oberfläche aus, wodurch Kondensatoren mit großen Kapazitäten realisiert werden können, wenn die Oberflächen der Poren entsprechend dem erfindungsgemäßen Kondensator mit einer Gegenelektrode bedeckt sind.

Der poröse Elektrodenkörper kann beispielsweise durch Sintern eines Pulvers oder einer Paste hergestellt sein. Dabei kommt insbesondere das Sintern eines Preßlings von tantal- oder niobhaltigem Pulver beziehungsweise einer entsprechend geeigneten Paste in Betracht.

Die Dielektrikumschicht der Elektrode kann beispielsweise durch Oxidation einer Oberflächenschicht eines Körpers hergestellt sein, dessen nichtoxidierter Rest den Elektrodenkörper bildet. In diesem Fall ist es besonders vorteilhaft, wenn die Dielektrikumschicht so ausgewählt wird, daß sie die Diffusion von Sauerstoff behindert. Dadurch kann die Diffusion von Sauerstoff von der Dielektrikumschicht in den Elektrodenkörper gehemmt werden, wodurch die mit der Zeit fortschreitende Veränderung der Dielektrikumschicht durch Verlust von Sauerstoff wirksam vermindert werden kann.

Als solche die Diffusion von Sauerstoff hemmende Zwischenschicht kommt beispielsweise eine Zwischenschicht in Betracht, die Scandium, Yttrium, ein Lanthanid, Titan, Zirkon, Vanadium, Chrom, oder Molybdän enthält. Als Lanthanid kommt dabei Lanthan, Cer, Praseodym, Neodym, Polonium, Samarium, Europium, Gadolinium, Terbium, Dysprosium, Holmium, Erbium, Ytterbium, Thulium oder Lutetium in Betracht. All diese Materialien sind aufgrund der niedrigen Diffusionsgeschwindigkeit von Sauerstoff als Diffusionsbarriere für Sauerstoff gut geeignet.

Für den Fall, daß der Elektrodenkörper Niob und die Dielektrikumschicht Nb₂O₅ umfaßt, ist es besonders vorteilhaft, eine Zwischenschicht zu verwenden, die Vanadium umfaßt, wie Experimente gezeigt haben.

Die Dicke der Zwischenschicht sollte dabei wenigstens zwei atomare Monolagen aufweisen. Es sind aber auch dickere Zwischenschichten denkbar.

Im folgenden wird die Erfindung anhand von Ausführungsbeispielen und den dazugehörigen Figuren näher erläutert.
- Figur 1: zeigt beispielhaft den prinzipiellen Aufbau einer erfindungsgemäßen Elektrode im schematischen Querschnitt.
- Figur 2: zeigt beispielhaft einen Elektrolyt-Kondensator mit der erfindungsgemäßen Elektrode als Anode im schematischen Querschnitt.

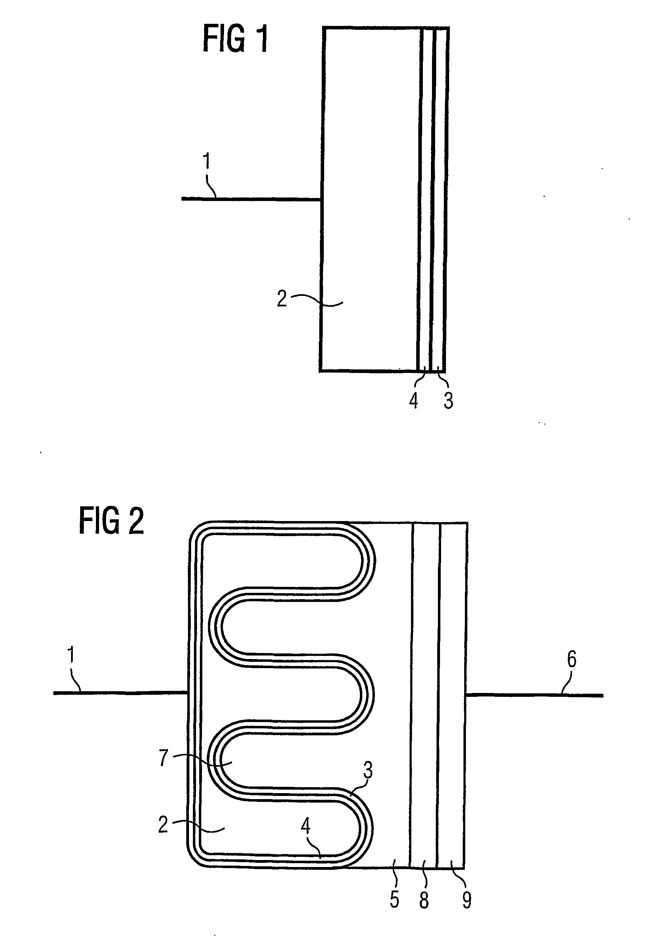

Figur 1 zeigt eine Elektrode mit einem Elektrodenkörper 2, der mit einem Elektrodenableiter 1 elektrisch leitend verbunden ist. Auf der Oberfläche des Elektrodenkörpers 2 ist eine Dielektrikumschicht 3 angeordnet. Zwischen dem Elektrodenkörper 2 und der Dielektrikumschicht 3 ist eine Zwischenschicht 4 angeordnet.

Figur 2 zeigt einen Elektrolyt-Kondensator mit der erfindungsgemäßen Elektrode als Anode, wobei die Elektrode dem prinzipiellen Aufbau aus Figur 1 entspricht und wobei der Elektrodenkörper 2 der Elektrode ein poröser Körper mit Poren 7 ist. Der Elektrodenkörper 2 umfaßt vorzugsweise ein Ventilmetall wie Tantal oder Niob, aus dem durch anodisches Oxidieren ein dielektrisches Oxid hergestellt werden kann.

Der Elektrodenkörper 2 wird vorzugsweise aus einer Legierung von Niob und Vanadium in Form eines Pulvers hergestellt. Dabei wird ein Elektrodenableiter 1 in Form eines Metalldrahtes oder in Form eines flächigen, metallischen Ableiters gestaltet. Beispielsweise wird ein tantalhaltiger Draht oder ein niobhaltiger Draht oder ein flächiger Ableiter aus einem entsprechenden Material von dem Pulver umpreßt und anschließend mit diesem zusammen gesintert. Daraus entsteht ein mit dem Elektrodenableiter 1 verbundener poröser Elektrodenkörper 2. Der Anteil des Vanadiums an der Legierung kann dabei typischerweise zwischen 10 Gew.-ppm und 50 Gew.-% betragen.

Die Herstellung der Elektrode kann alternativ auch mit Hilfe einer Paste erfolgen, die auf dem Elektrodenableiter 1 durch eine geeignete Methode, wie zum Beispiel Siebdruck, aufgetragen und anschließend gesintert wird.

In einem weiteren Prozeßschritt kann auf der Oberfläche des Elektrodenkörpers 2 durch anodisches Oxidieren eine dielektrische Schicht von Nb₂O₅ gebildet werden. Diese Schicht bildet dann die Dielektrikumschicht 3. Eine Elektrode aus Niob zeichnet sich durch eine hohe spezifische Ladung und durch eine hohe Dielektrizitätskonstante des gebildeten Dielektrikums aus. Der oben genannte Prozeßschritt ist dem Fachmann an sich als Formierung bekannt und kann zum Beispiel mit einem Elektrodenkörper 2, der in einen Elektrolyten eintaucht mit einem Phosphorsäuregehalt zwischen typischerweise 0,1 und 5 % bei einer Temperatur zwischen typischerweise 30 und 85 °C durchgeführt werden. Zwischen dem Elektrodenableiter 1 und der bei der Formierung verwendeten Gegenelektrode wird eine Formierspannung vorzugsweise zwischen 10 und 80 V angelegt.

In einem weiteren Fertigungsschritt wird nach der Bildung des Oxids durch Wärmebehandlung zwischen 250 und 450 °C für eine Dauer von 0,5 bis 3 Stunden erreicht, daß ein Teil des Vanadiums von der Legierung an die Oberfläche des Elektrodenkörpers 2 segregiert und zwischen der Dielektrikumschicht 3 und dem Elektrodenkörper 2 eine Zwischenschicht 4 ausbildet. Die Segregation ist möglich aufgrund unterschiedlicher Oberflächenenergien von Vanadium und Niob.

Die Zwischenschicht 4 besteht aus Vanadium das gegebenenfalls noch Verunreinigungen enthalten kann. Vanadium hat die Eigenschaft, daß es Sauerstoff weniger gut löst und weniger gut diffundieren läßt als Niob. Demnach ist es eine geeignete Diffusionsbarriere für den in der Dielektrikumschicht 3 aus Nb₂O₅ abgegebenen Sauerstoff, der ansonsten in den Niob-Elektrodenkörper 2 eindiffundieren würde. Durch diesen Sauerstoffverlust würde die Oxidschicht mit der Zeit in Suboxide umgewandelt werden.

Die so hergestellte erfindungsgemäße Elektrode kann weiterhin in an sich bekannter Weise zu einem Kondensator vervollständigt werden.

Die Poren 7 der Elektrode werden mit einem Gegenelektrodenmaterial 5 gefüllt, beispielsweise mit MnO₂ oder einem leitfähigen Polymer. In weiteren Prozeßschritten werden Kontaktschichten 8, 9 hergestellt, die schließlich mit einem Gegenelektrodenableiter 6 verbunden werden. Die erste Kontaktschicht 8 kann beispielsweise aus Graphit und die zweite Kontaktschicht 9 beispielsweise aus Silberleitlack gefertigt sein.

Die Erfindung beschränkt sich nicht auf die beispielhaft dargestellten Ausführungsbeispiele, sondern wird in ihrer allgemeinsten Form durch Patentanspruch 1 und 11 definiert.

## Patentansprüche

1. Elektrode für einen Kondensator mit
- einem Elektrodenableiter (1) und
- einem porösen Elektrodenkörper (2),
- der mit dem Elektrodenableiter (1) kontaktiert ist und
- auf dessen innerer Oberfläche eine Dielektrikumschicht (3) angeordnet ist,
- bei der zwischen dem Elektrodenkörper (2) und der Dielektrikumschicht (3) eine Zwischenschicht (4) angeordnet ist, die den Austausch von Materie zwischen der Dielektrikumschicht (3) und dem Elektrodenkörper (2) hemmt, wobei
- der Elektrodenkörper (2) aus einem Material hergestellt ist, das eine Komponente A und eine Komponente B umfaßt, und
- die Oberflächenenergie der Komponente B kleiner ist als die Oberflächenenergie der Komponente A, und
- die Zwischenschicht (4) einen aus dem Material segregierten Teil der Komponente B umfaßt.

2. Elektrode nach Anspruch 1,
bei der der Elektrodenkörper (2) durch Sintern eines Pulvers oder einer Paste hergestellt ist.

3. Elektrode nach Anspruch 1 bis 2,
bei der die Dielektrikumschicht (3) durch Oxidation einer Oberflächenschicht eines Körpers hergestellt ist, dessen nichtoxiderter Rest den Elektrodenkörper (2) bildet, und bei der die Zwischenschicht (4) die Diffusion von Sauerstoff zwischen der Dielektrikumschicht (3) und dem Elektrodenkörper (2) hemmt.

4. Elektrode nach Anspruch 1 bis 3,
bei der die Zwischenschicht (4) Scandium, Yttrium, ein Lanthanid, Titan, Zirkon, Vanadium, Chrom oder Molybdän enthält.

5. Elektrode nach einem der vorhergehenden Ansprüche,
bei der die Dielektrikumschicht (3) Nb₂O₅, der Elektrodenkörper (2) Niob und die Zwischenschicht (4) Vanadium umfaßt.

6. Elektrode nach einem der vorhergehenden Ansprüche,
bei der die Zwischenschicht (4) eine Dicke von wenigstens zwei atomaren Monolagen aufweist.

7. Elektrode nach einem der vorhergehenden Ansprüche,
bei der der Elektrodenkörper (2) aus einer metallischen Legierung oder Dotierung hergestellt ist und bei der der Anteil der Komponente B an der Legierung zwischen 10 Gew.-ppm und 50 Gew.-% beträgt.

8. Elektrode nach Anspruch 7,
bei der die Komponente A ein Ventilmetall oder eine ventilmetallhaltige Legierung und die Komponente B ein Metall ist.

9. Elektrode nach Anspruch 8,
bei der der Elektrodenkörper (2) aus einer Niob und Vanadium enthaltenden Legierung hergestellt ist und bei der die Zwischenschicht (4) segregiertes Vanadium enthält.

10. Elektrode nach einem der vorhergehenden Ansprüche,
bei der die Komponente B in Form einer Dotierung in dem Material des Elektrodenkörpers (2) vorliegt.

11. Kondensator mit einer Elektrode nach einem der vorhergehenden Ansprüche,
der eine Gegenelektrode (5) aufweist, und bei dem die Dielektrikumschicht (3) zwischen der Zwischenschicht (4) und der Gegenelektrode (5) angeordnet ist.

12. Kondensator nach Anspruch 11, bei dem die Oberflächen der Poren (7) der Elektrode mit einer Gegenelektrode (5) bedeckt sind und bei dem die Gegenelektrode (5) mit einem Gegenelektrodenableiter (6) kontaktiert ist.

## Claims

1. Electrode for a capacitor, said electrode comprising
- an electrode output conductor (1) and
- a porous electrode body (2)
- which is contact-connected to the electrode output conductor (1) and
- on the inner surface of which a dielectric layer (3) is arranged,
- in which an interlayer (4) which inhibits the exchange of material between the dielectric layer (3) and the electrode body (2) is arranged between the electrode body (2) and the dielectric layer (3),
- the electrode body (2) being produced from a material which comprises a component A and a component B, and
- the surface energy of the component B being lower than the surface energy of the component A, and
- the interlayer (4) comprising a part of the component B which has been segregated from the material.

2. Electrode according to Claim 1,
in which the electrode body (2) is produced by sintering a powder or a paste.

3. Electrode according to Claims 1 to 2,
in which the dielectric layer (3) is produced by oxidizing a surface layer of a body whose non-oxidized remainder forms the electrode body (2), and in which the interlayer (4) inhibits the diffusion of oxygen between the dielectric layer (3) and the electrode body (2).

4. Electrode according to Claims 1 to 3,
in which the interlayer (4) contains scandium, yttrium, a lanthanide, titanium, zirconium, vanadium, chromium or molybdenum.

5. Electrode according to one of the preceding claims,
in which the dielectric layer (3) comprises Nb₂O₅, the electrode body (2) comprises niobium and the interlayer (4) comprises vanadium.

6. Electrode according to one of the preceding claims,
in which the interlayer (4) has a thickness of at least two atomic monolayers.

7. Electrode according to one of the preceding claims,
in which the electrode body (2) is produced from a metallic alloy or doping, and in which the proportion of the component B in the alloy is between 10 ppm by weight and 50% by weight.

8. Electrode according to Claim 7,
in which the component A is a valve metal or an alloy containing valve metal and the component B is a metal.

9. Electrode according to Claim 8,
in which the electrode body (2) is produced from an alloy containing niobium and vanadium, and in which the interlayer (4) contains segregated vanadium.

10. Electrode according to one of the preceding claims,
in which the component B is in the form of a doping in the material of the electrode body (2).

11. Capacitor provided with an electrode according to one of the preceding claims,
which capacitor has a counterelectrode (5), and in which the dielectric layer (3) is arranged between the interlayer (4) and the counterelectrode (5).

12. Capacitor according to Claim 11, in which the surfaces of the pores (7) of the electrode are covered with a counterelectrode (5), and in which the counterelectrode (5) is contact-connected to a counterelectrode output conductor (6).

## Revendications

1. Electrode pour un condensateur comprenant
- un conducteur d'électrode (1) et
- un corps poreux d'électrode (2),
- qui est mis en contact avec le conducteur d'électrode (1) et sur la surface intérieure duquel est disposée une couche de diélectrique (3),
- dans laquelle il est disposé entre le corps d'électrode (2) et la couche de diélectrique (3) une couche intermédiaire (4) qui enraye l'échange de matière entre la couche de diélectrique (3) et le cors d'électrode (2), dans laquelle
- le corps d'électrode (2) est fabriqué d'un matériau qui comprend un constituant A et un constituant B et
- l'énergie superficielle du constituant B est plus petite que l'énergie superficielle du constituant A et
- la couche intermédiaire (4) comprend une partie du constituant B qui s'est séparée du matériau.

2. Electrode suivant la revendication 1,
dans laquelle le corps d'électrode (2) est fabriqué par frittage d'une poudre ou d'une pâte.

3. Electrode suivant la revendication 1 ou 2,
dans laquelle la couche de diélectrique (3) est produite par oxydation d'une couche superficielle d'un corps dont le reste non oxydé forme le corps d'électrode (2), et dans laquelle la couche intermédiaire (4) enraye la diffusion de l'oxygène entre la couche de diélectrique (3) et le corps d'électrode (2).

4. Electrode suivant la revendication 1 à 3,
dans laquelle la couche intermédiaire (4) contient du scandium, de l'yttrium, un lanthanide, du titane, du zirconium, du vanadium, du chrome ou du molybdène.

5. Electrode suivant l'une des revendications précédentes,
dans laquelle la couche de diélectrique (3) comprend Nb₂O₅, le corps d'électrode (2) comprend du niobium et la couche intermédiaire (4) comprend du vanadium.

6. Electrode suivant l'une des revendications précédentes,
dans laquelle la couche intermédiaire (4) a une épaisseur d'au moins deux monocouches atomiques.

7. Electrode suivant l'une des revendications précédentes,
dans laquelle le corps d'électrode (2) est en un alliage métallique ou en un dopage et dans laquelle la proportion du constituant B dans l'alliage est comprise entre 10 ppm en poids et 50 % en poids.

8. Electrode suivant la revendication 7,
dans laquelle le constituant A est un métal vanne ou un alliage contenant un métal vanne et le constituant B est un métal.

9. Electrode suivant la revendication 8,
dans laquelle le corps d'électrode (2) est fabriqué d'un alliage contenant du niobium et du vanadium et dans laquelle la couche intermédiaire (4) contient du vanadium qui s'est séparé.

10. Electrode suivant l'une des revendications précédentes,
dans laquelle le constituant B est sous la forme d'un dopage du matériau du corps de l'électrode (2).

11. Condensateur ayant une électrode suivant l'une des revendications précédentes,
qui comporte une contre-électrode (5) et dans lequel la couche de diélectrique (3) est disposée entre la couche intermédiaire (4) et la contre-électrode (5).

12. Condensateur suivant la revendication 11, dans lequel les surfaces des pores (7) de l'électrode sont revêtues d'une contre-électrode (5) et dans lequel la contre-électrode (5) est en contact avec un conducteur (6) de contre-électrode.
